(19) **Europäisches Patentamt**
**European Patent Office**
**Office européen des brevets**

(11) **EP 3 470 720 B1**

(12) **EUROPEAN PATENT SPECIFICATION**

(45) Date of publication and mention
of the grant of the patent:
**20.05.2020 Bulletin 2020/21**

(51) Int Cl.:
*F16L 15/04* *(2006.01)*     *F16L 15/00* *(2006.01)*
*F16L 15/06* *(2006.01)*     *E21B 17/042* *(2006.01)*

(21) Application number: **17810226.5**

(22) Date of filing: **02.06.2017**

(86) International application number:
**PCT/JP2017/020651**

(87) International publication number:
**WO 2017/213048 (14.12.2017 Gazette 2017/50)**

(54) **STEEL PIPE SCREW JOINT**

STAHLROHRSCHRAUBVERBINDUNG

RACCORD À VIS DESTINÉ À UN TUYAU EN ACIER

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.06.2016 JP 2016114139**

(43) Date of publication of application:
**17.04.2019 Bulletin 2019/16**

(73) Proprietors:
• **Nippon Steel Corporation**
**Tokyo 100-8071 (JP)**
• **Vallourec Oil and Gas France**
**59620 Aulnoye-Aymeries (FR)**

(72) Inventors:
• **SUGINO, Masaaki**
**Tokyo 100-8071 (JP)**
• **DOUCHI, Sadao**
**Tokyo 100-8071 (JP)**
• **YAMAMOTO, Yasuhiro**
**Tokyo 100-8071 (JP)**

(74) Representative: **J A Kemp LLP**
**14 South Square**
**Gray's Inn**
**London WC1R 5JJ (GB)**

(56) References cited:
EP-A1- 1 302 623        WO-A1-2015/033997
WO-A1-2015/194193       WO-A1-2015/194193
WO-A1-2016/056222       JP-A- 2001 056 075
JP-A- 2010 520 981      US-A- 4 795 200
US-A1- 2004 130 152     US-A1- 2006 087 119
US-B1- 8 029 025

**Description**

BACKGROUND

Technical Field

The present disclosure relates to a threaded connection used for connecting steel pipes.

Description of the Background Art

Steel pipes called oil country tubular goods are used, for example, for prospecting and producing oil or natural gas in oil wells or natural gas wells (hereinafter collectively referred to as "oil well"), developing non-conventional resources such as oil sand or shale gas, retrieving or storing carbon dioxide (Carbon dioxide Capture and Storage (CCS)), geothermal power generation, or in hot springs. A threaded connection is used to connect steel pipes.

Such threaded connections for steel pipes are generally categorized as coupling-type and integral-type. A coupling-type connection connects a pair of pipes, one of which is a steel pipe and the other one is a coupling. In this case, a male thread is provided on the outer periphery of each of the ends of the steel pipe, while a female thread is provided on the inner periphery of each of the ends of the coupling. Then, the male thread of the steel pipe is screwed onto the female thread of the coupling such that they are made up and connected. An integral-type connection connects a pair of pipes that are both steel pipes, and does not use a separate coupling. In this case, a male thread is provided on the outer periphery of one end of each steel pipe, while a female thread is provided on the inner periphery of the other end. Then, the male thread of one steel pipe is screwed onto the female thread of the other steel pipe such that they are made up and connected.

A connection portion of a pipe end on which a male thread is provided includes an element to be inserted into a female thread, and thus is usually referred to as "pin". A connection portion of a pipe end on which a female thread is provided includes an element for receiving a male thread, and thus is referred to as "box". A pin and a box constitute ends of pipes and are thus tubular in shape.

An oil well is drilled along while its side wall is reinforced by oil country tubular goods to prevent the side wall from collapsing during digging, which results in multiple oil country tubular goods arranged in one another. In recent years, both land and offshore wells have become deeper and deeper; in such environments, threaded connections in which the inner and outer diameters of the connection portions are generally the same as the inner and outer diameters of the steel pipes are often used to connect oil country tubular goods, in order to develop oil wells efficiently. The use of such threaded connections minimizes the clearances between the oil country tubular goods arranged in one another, making it possible to efficiently develop a deep oil well without significantly increasing the diameter of the well. A threaded connection is required to have good sealing performance against a pressure fluid from the inside (hereinafter also referred to as "internal pressure") and a pressure fluid from the outside (hereinafter also referred to as "external pressure") under the above-described restrictions on the inner and outer diameters.

In some known threaded connections that provide a sufficient sealing performance, a seal assembly is formed by metal-to-metal contact. A seal assembly formed by metal-to-metal contact as used herein is one in which the diameter of the sealing surface of the pin is slightly larger than the diameter of the sealing surface of the box (the difference between these diameters will be referred to as interference) and, when the threaded connection is made up such that the sealing surfaces fit together, the interference reduces the diameter of the sealing surface of the pin and increases the diameter of the sealing surface of the box such that the sealing surfaces attempt to return to their original diameters with an elastic recovery force that generates a contact pressure on the sealing surfaces such that they come to close contact with each other along the entire circumference, thereby exhibiting a sealing performance.

Threaded connections in which the inner and outer diameters of the connection portions are generally the same as the inner and outer diameters of the steel pipes include, for example, flush-type, semi-flush-type, slim-type and special-clearance-type connections (hereinafter collectively referred to as "slim-type" connections). In slim-type threaded connections, the inner and outer diameters are strictly limited, which means a small wall thickness of the tip portion of the pin on which a sealing surface for the internal pressure (i.e. pin inner sealing surface) is provided, and thus the elastic recovery force of the pin inner sealing surface cannot be sufficiently increased.

To increase the sealing performance against the inner pressure, it is known to provide a nose closer to the tip of the pin than the pin inner sealing surface is. For example, European Patent No. 1836426, in FIG. 1, and U.S. Patent No. 4795200, in FIGS. 1 and 2, each disclose a threaded connection with a nose provided on the tip of the pin.

Since the nose does not interfere with the box, it has the function of amplifying the elastic recovery force of the pin inner sealing surface. That is, the nose amplifies the adhesion force between the pin inner sealing surface and box inner sealing surface, thereby improving the sealing performance against the internal pressure.

WO 2015/194193 A1 discloses a threaded coupling which is configured of a pin and a box. The pin is provided, in order from the pipe main body of the pin toward the distal end, with a male threaded part and a lip part including a seal surface, and the box is provided with a female threaded part corresponding to the male threaded part of the pin, and a concave part including a seal surface corresponding to the lip part. The lip part is provided, in order from the male threaded part toward the distal end of the pin, with a neck part and a scaling head part including the seal surface, and the maximum outside diameter of the area of the seal surface in the sealing head part is greater than the out-side diameter in the position of the neck part that borders the male threaded part. This threaded coupling can reliably exhibit high sealing performance while maintaining high torque-resistant performance due to a tapering thread having a dovetail shape.

US 8,029,025 B1 discloses a tubular connection which includes a pin member and box member. The pin member includes a pin thread formed on a small step and a large step and a first seal surface formed between the small step and the large step. The box member includes a box thread formed on a small step and a large step and a second seal surface formed between the small step and the large step. The pin thread and the box thread are wedge threads. The small step and the large step of both the pin member and the box member are formed on a single taper. Upon a selected make-up of the pin member with the box member, a seal is formed between at least a portion of the first seal surface and the second seal surface.

SUMMARY

Providing a nose on the tip of the pin improves the sealing performance against the internal pressure. However, in a slim-type threaded connection, the wall thickness of the nose is very small due to dimensional restrictions, and it may not be possible to provide a sufficient sealing performance against the internal pressure. If the wall thickness of the tip of the pin is increased to increase the sealing performance against the internal pressure, all the other portions of the pin, i.e. the male-thread portion and the outer seal portion, discussed below, have increased diameters and, as a result, restrictions on the outer diameter of the connection portion necessitate smaller overall wall thicknesses of the opposite portions of the box, which means decreased wall thickness of the outer seal portion of the box, decreasing the sealing performance against the external pressure.

An object of the present disclosure is to provide a threaded connection for steel pipe with improved sealing performance against the internal pressure, where the sealing performance against the external pressure is not decreased.

The threaded connection for steel pipe according to the present disclosure includes a tubular pin and a tubular box. The box and the pin are made up as the pin is inserted into the box. The pin includes a pin lip, a pin shoulder, a male thread, and a pin outer sealing surface. The pin lip includes a pin inner sealing surface and a nose. The pin inner sealing surface is provided on the outer periphery of a tip portion of the pin. The nose is located closer to the tip of the pin than the pin inner sealing surface. The nose has an outer peripheral surface with a diameter smaller than the diameter of the inner peripheral surface of the box facing the pin. The outer peripheral surface of the nose and the pin inner sealing surface form a discontinuous shape. The pin shoulder surface is provided on an end of the pin located closer to the steel pipe body. The male thread is provided on the outer periphery of the pin between the pin lip and the pin shoulder surface. The male thread is constituted by a dove-tailed tapered thread. The pin outer sealing surface is provided on the outer periphery of the pin between the pin lip and the pin shoulder surface. The box includes a box inner sealing surface, a box shoulder surface, a female thread, and a box outer sealing surface. The box inner sealing surface is provided on the inner periphery of the box so as to correspond to the pin inner sealing surface. The box inner sealing surface is in contact with the pin inner sealing surface when the connection has been made up. The box shoulder surface is provided on an end side of the box so as to correspond to the pin shoulder surface. The box shoulder surface is in contact with the pin shoulder surface when the connection has been made up. The female thread is provided on the inner periphery of the box so as to correspond to the male thread. The female thread is constituted by a dove-tailed tapered thread. The female thread has a stabbing flank facing a stabbing flank of the male thread so as to leave a clearance when the connection has been made up. The box outer sealing surface is provided on the inner periphery of the box so as to correspond to the pin outer sealing surface. The box outer sealing surface is in contact with the pin outer sealing surface when the connection has been made up. The following equations (1) to (3), are satisfied:

$$D \geq P \times 1.5 \qquad (1),$$

$$L > P \qquad (2),$$

and

$$| D-L | \leq P \qquad (3),$$

where D is the distance between the male thread and the pin inner sealing surface as measured in the pipe-axis direction, L is the length of the nose as measured in the pipe-axis direction, and P is the thread pitch of the male thread.

The threaded connection for steel pipe according to the present disclosure improves the sealing performance against the internal pressure without decreasing the sealing performance against the external pressure.

BRIEF DESCRIPTION OF THE DRAWINGS

[FIG. 1] FIG. 1 is a schematic longitudinal cross-sectional view of a threaded connection for steel pipe according to an embodiment.

[FIG. 2] FIG. 2 is an enlarged view of the threads of the threaded connection shown in FIG. 1.

[FIG. 3] FIG. 3 is an enlarged view of an inner end portion, as determined along the pipe-axis direction, of the threaded connection shown in FIG. 1.

[FIG. 4] FIG. 4 is an enlarged view of the threads of the threaded connection shown in FIG. 1.

[FIG. 5] FIG. 5 is a longitudinal cross-sectional view of a conventional threaded connection for steel pipe.

DETAILED DESCRIPTION OF THE PREFERRED EMBODIMENTS

In a threaded connection for steel pipe, it is necessary to provide a sufficient sealing performance against the internal and external pressures while providing the necessary elements, such as threads, seal portions and shoulders, within limited wall thicknesses. Particularly, in a slim-type threaded connection, dimensional restrictions are very tight, as discussed above, and thus it is not possible anymore to provide a high sealing performance against both the external and internal pressures by means of only one seal assembly. In view of this, in a slim-type threaded connection, to provide both a certain sealing performance against the external pressure and a certain sealing performance against the internal pressure, it is necessary to separately provide an outer seal assembly for providing a sealing performance against the external pressure and an inner seal assembly for providing a sealing performance against the internal pressure.

Typically, an inner seal assembly is provided close to the inner end of the threaded connection as determined along the pipe-axis direction. That is, the inner seal assembly is usually located inward of the threads as determined along the pipe-axis direction. The inner seal assembly is composed of a pin inner sealing surface and a box inner sealing surface. The pin inner sealing surface is provided on the outer periphery of a pin lip, which constitutes the tip of the pin. This reduces the wall thickness of the pin lip such that the pin lip can be easily be pushed against the box by the internal pressure load acting on the inner peripheral surface of the pin lip. This amplifies the adhesion force between the pin inner sealing surface and the box inner sealing surface, improving the sealing performance against the internal pressure. The amplification of adhesion force by the internal pressure load is increased by providing a sufficient distance between the thread and pin internal sealing surface.

Other than the amplification of adhesion force by the internal pressure load, there are other reasons why providing an inner seal assembly on the inner end of the threaded connection as determined along the pipe-axis direction is preferred. For example, when the pin and box are to be made up, lubricant may be applied to the surfaces of the threads and/or the surfaces of the seal assembly. Providing an inner seal assembly inward of the threads as determined along the pipe-axis direction prevents the lubricant from flowing into the interior of the steel pipe during make-up or during the use of the steel pipe that has been made up.

Further, providing an inner seal assembly inward of the threads as determined along the pipe-axis direction prevents internal fluid, such as crude oil or natural gas, from entering the threads. This avoids the entering of internal fluid between the narrow clearances between the threads, which would cause crevice corrosion and thus produce a hole in the threads or lead to thread failure.

In a slim-type threaded connection, the wall thickness of the pin lip on which the inner sealing surface is provided is inevitably very small. Thus, increasing the interference at the inner seal assembly does not significantly amplify the elastic recovery force of the pin inner sealing surface. Thus, in a slim-type threaded connection, even with the addition of the effect of the internal pressure load acting on the inner peripheral surface of the pin lip, the adhesion force of the pin inner sealing surface to the box inner sealing surface is not significantly amplified, and thus the sealing performance against the internal pressure cannot be significantly improved.

As used herein, the sealing performance against the internal pressure does not mean the sealing performance found when only the internal pressure load is applied. Rather, the sealing performance against the internal pressure means the sealing performance found when, in addition to the internal pressure load, various loads expected in actual use such as tension and compression in the pipe-axis direction, bending and the external pressure load are repeatedly applied, or after such loads are applied. Methods of evaluating the sealing performance of a threaded connection under repeated combined loads using actual samples include, for example, the evaluation experiments specified by API5C5 and ISO 13679.

As discussed above, in a slim-type threaded connection, dimensional restrictions make it difficult to provide good sealing performance against the internal pressure only by means of the inner seal assembly. To improve the sealing performance against the internal pressure in a slim-type threaded connection, it is known to provide a nose on the tip of the pin lip.

The nose is constructed so as not to interfere with the box. Thus, the nose has the function of amplifying the elastic recovery force through which the pin inner sealing surface, after having its diameter reduced by its interference with the box inner sealing surface, attempts to return to its original diameter. This suggests that providing a nose on the pin lip will amplify the adhesion force at the inner seal assembly even when the interference at the inner seal assembly is not increased, thereby improving the sealing performance against the internal pressure.

In reality, however, simply providing a nose on the pin lip does not significantly amplify the adhesion force at the inner seal assembly because, in a slim-type threaded connection, dimensional restrictions make the wall thickness of the nose very small.

Moreover, since the nose does not interfere with the box, the internal pressure load acts on both its inner and outer peripheral surfaces. That is, the nose attempts to stay in its position when the internal pressure load is applied thereto, and thus does not have the effect of amplifying the adhesion force derived from the internal pressure load.

Further, providing a nose increases the stiffness of the pin lip, thereby preventing deformation of the pin lip. The inventors of the threaded connection of the embodiment found that, if that is the case, the amplification of adhesion force by the internal pressure load, which is obtained by providing a sufficient distance between the thread and pin inner sealing surface, diminishes.

Thus, to effectively amplify the adhesion force at the inner seal assembly in a slim-type threaded connection, the balancing between the distance between the thread and pin inner sealing surface as measured in the pipe-axis direction and the length of the nose as measured in the pipe-axis direction is important. However, in conventional slim-type threaded connections, such balancing is not taken into consideration.

To improve the sealing performance against the internal pressure, it is also important to cause the pin inner sealing surface and box inner sealing surface to properly contact each other.

In a slim-type threaded connection, dimensional restrictions necessitate a small wall thickness of the pin lip. Thus, when the internal pressure load acts on the inner surface of the pin lip, the portion thereof between the thread and pin inner sealing surface expands toward the outer periphery, causing the pin inner sealing surface to be inclined relative to the box inner sealing surface. The inventors found that this inclination of the pin inner sealing surface increases as the distance between the thread and pin inner sealing surface as measured in the pipe-axis direction increases. When the pin inner sealing surface is inclined relative to the box inner sealing surface, the position of contact between the pin inner sealing surface and box inner sealing surface moves, destabilizing the sealing performance against the internal pressure. That is, the position of contact between the pin inner sealing surface and box inner sealing surface is slipped, by their sliding during make-up, from the position at which they have come to fit, increasing the possibility of a leak of the internal fluid.

The compressive load may also cause the position of contact between the pin inner sealing surface and box inner sealing surface to move or cause the pin inner sealing surface and/or box inner sealing surface to be slipped in the pipe-axis direction. A slim-type threaded connection has a relatively large diameter and a relatively small wall thickness, and thus the relative slip of the pin from the box caused by the compressive load is larger than in threaded connections of other types. To improve sealing performance, it is necessary to reduce the relative slip of the pin from the box.

Threaded connections with threads of various types have been invented. The relative slip of the pin from the box caused by the compressive load is smallest with threads of a type in which the stabbing flank of the male thread is in contact with the stabbing flank of the female thread when the connection has been made up. With threads having stabbing flanks with negative angles, i.e. threads where each stabbing flank is inclined toward the tip of the pin relative to a plane perpendicular to the pipe-axis direction, the relative slip of the pin from the box can be further reduced.

Particularly known ones of such threads have a thread width that gradually changes along the lead direction and a dove-tailed cross-sectional shape (hereinafter referred to as dove-tailed threads). A dove-tailed thread usually has an effect known as auto-frettage. As such, a threaded connection with dove-tailed threads usually has no shoulder for limiting the screw-in of the pin into the box.

In a threaded connection with dove-tailed threads, the stabbing flanks contact each other and the load flanks contact each other and the male thread and female thread fit together to complete make-up. In such a threaded connection, the position at which make-up is completed may be significantly changed by, for example, a lead error, an angle error between the stabbing flank and/or load flank, an elliptical error, a thread-width error or the like. This makes it difficult to introduce a stable amount of interference for the seal assembly, destabilizing sealing performance.

Other than dove-tailed threads with auto-frettage, threads that have reduced relative slip of the pin from the box includes those where the cross-sectional shape is dove-tailed and a clearance is formed between the stabbing flank of the male thread and the stabbing flank of the female thread when the connection has been made up. The inventors assumed that, if such threads are adopted in a slim-type threaded connection, the relative slip of the pin from the box, which tends to be large in slim-type thread connections, can be reduced without causing a problem, thereby providing a stable sealing performance.

A threaded connection where a clearance is formed between the stabbing flank of the male thread and the stabbing flank of the female thread when the connection has been made up are not susceptible to such errors as listed above. Further, if shoulders are provided in such a threaded connection, the position of completion of make-up can be controlled by the shoulders. This prevents the position of completion of make-up from changing such that the amount of interference at the seal assembly is stable, thereby stabilizing sealing performance.

Based on these findings, the inventors arrived at a threaded connection for steel pipe with improved sealing performance against the internal pressure where the sealing performance against the external pressure is maintained.

The threaded connection for steel pipe according to the present disclosure includes a tubular pin and a tubular box. The box has an outer diameter smaller than 108 % of the outer diameter of a steel-pipe body. The box and the pin are made up as the pin is inserted into the box. The pin includes a pin lip, a pin shoulder surface, a male thread, and a pin outer sealing surface. The pin lip includes a pin inner sealing surface and a nose. The pin inner sealing surface is provided on the outer periphery of a tip portion of the pin. The nose is located closer to the tip of the pin than the pin inner sealing surface. The nose has an outer peripheral surface with a diameter smaller than the diameter of the inner peripheral surface of the box facing the pin. The outer peripheral surface of the nose and the pin inner sealing surface forming a discontinuous shape. The pin shoulder surface is provided on an end of the pin located closer to the steel-pipe body. The male thread is provided on the outer periphery of the pin between the pin lip and the pin shoulder surface. The male thread is constituted by a dove-tailed tapered thread. The pin outer sealing surface is provided on the outer periphery of the pin between the pin lip and the pin shoulder surface. The box includes a box inner sealing surface, a box shoulder surface, a female thread, and a box outer sealing surface. The box inner sealing surface is provided on the inner periphery of the box so as to correspond to the pin inner sealing surface. The box inner sealing surface is in contact with the pin inner sealing surface when the connection has been made up. The box shoulder surface is provided on an end side of the box so as to correspond to the pin shoulder surface. The box shoulder surface is in contact with the pin shoulder surface when the connection has been made up. The female thread is provided on the inner periphery of the box so as to correspond to the male thread. The female thread is constituted by a dove-tailed tapered thread. The female thread has a stabbing flank facing a stabbing flank of the male thread so as to leave a clearance when the connection has been made up. The box outer sealing surface is provided on the inner periphery of the box so as to correspond to the pin outer sealing surface. The box outer sealing surface is in contact with the pin outer sealing surface when the connection has been made up. The following equations (1) to (3), are satisfied:

$$D \geq P \times 1.5 \qquad (1),$$

$$L > P \qquad (2),$$

and

$$|D-L| \leq P \qquad (3),$$

where D is the distance between the male thread and the pin inner sealing surface as measured in the pipe-axis direction, L is the length of the nose as measured in the pipe-axis direction, and P is the thread pitch of the male thread (first arrangement).

In the first arrangement, the distance D between the male thread and pin inner sealing surface as measured in the pipe-axis direction is 1.5 times the thread pitch P of the male thread or larger. The length L of the nose as measured in the pipe-axis direction is larger than the thread pitch P. The difference between the distance D between the male thread and pin inner sealing surface and the length L of the nose is equal to or smaller than the thread pitch P. As the pin inner sealing surface and nose are arranged on the pin lip with this balancing, the adhesion force of the pin inner sealing surface to the box inner sealing surface is amplified by the nose and, at the same time, the nose is prevented from reducing the amplification of adhesion force by the internal pressure load, which depends on the distance between the male thread and pin inner sealing surface. This effectively amplifies the adhesion force between the pin inner sealing surface and box inner sealing surface.

In the first arrangement, the pin lip includes a nose; thus, the bending rigidity of the pin lip is large and the pin lip cannot be easily deformed. This prevents the pin inner sealing surface from being inclined, by the internal pressure load, relative to the box inner sealing surface. This prevents the position of contact between the pin inner sealing surface and box inner sealing surface from moving, thereby avoiding decrease in the sealing performance against the internal pressure.

In the first arrangement, each of the male and female threads is constituted by a dove-tailed tapered thread. A clearance is formed between the stabbing flank of the male thread and the stabbing flank of the female thread when the connection has been made up, making the threaded connection less susceptible to various errors. Further, since the pin shoulder surface and box shoulder surface are in contact with each other when the connection has been made up, the position of completion of make-up is stabilized. Thus, a stable amount of interference at the seal assembly can be introduced, thereby stabilizing the sealing performance against the internal and external pressures.

Thus, in the first arrangement, a high and stable sealing performance against the internal pressure can be provided without changing the elements for providing a sealing performance against the external pressure. That is, the sealing performance against the internal pressure can be improved without decreasing the sealing performance against the external pressure.

The pin inner sealing surface may be a convex surface including a tapered surface reducing its diameter toward the tip of the pin and arc surfaces each continually connecting to the corresponding one of the edges of the tapered surface. The box inner sealing surface may include a tapered surface having a larger length than the pin inner sealing surface (second arrangement).

Typically, the pin inner sealing surface is formed by a single arc surface having a large radius of curvature. Such a shape of the pin inner sealing surface may cause the position of contact between the pin inner sealing surface and box inner sealing surface to significantly move when the pin inner sealing surface becomes inclined relative to the box inner sealing surface due to the internal pressure load.

In contrast, in the second arrangement, the pin inner sealing surface is formed by a tapered surface and a pair of arc surfaces each continually connecting to the corresponding edge of the tapered surface and having a relatively small radius of curvature. In this arrangement, the tapered surface of the pin inner sealing surface slides in contact with the tapered surface of the box inner sealing surface during most of the make-up process and, during the final stage of make-up and after completion of make-up, the arc surface that is closer to the steel-pipe body is in contact with the tapered surface of the box inner sealing surface. Thus, as an arc surface with a relative small radius of curvature is in contact with the box inner sealing surface, the amount of movement of the position of contact between the pin inner sealing surface and box inner sealing surface can be small even when the pin inner sealing surface is inclined relative to the box inner sealing surface. This stabilizes the sealing performance against the internal pressure.

The arc surfaces may have a radius of curvature of 3 mm to 30 mm (third arrangement).

The pin outer sealing surface may be located at an end of the pin adjacent the steel-pipe body (forth arrangement).

In the fourth arrangement, an inner seal assembly composed of the pin inner sealing surface and box inner sealing surface and an outer seal assembly composed of the pin outer sealing surface and box outer sealing surface are provided on the ends of the connection as determined along the pipe-axis direction. Thus, the thread assembly composed of the male thread and the female thread is located between the inner seal assembly and outer seal assembly, thereby making it possible to implement the thread assembly using a single-stage thread, for example. In such implementations, the wall thickness which can be used for threads is relatively large, thereby providing sufficient perfect thread regions. This prevents the decrease in the tensile strength of the thread connection, thereby providing sufficient connection strength.

The distance D may be three times the thread pitch P or smaller (fifth arrangement).

In the fifth arrangement, the pin lip is not excessively long, thereby reducing the material cost and/or manufacturing cost.

The thread assembly composed of the male thread and the female thread may have a thread width changing along the lead direction (sixth arrangement).

In the sixth arrangement, the clearance between the stabbing flank of the male thread and the stabbing flank of the female thread is large during most of the make-up process, and this clearance becomes small directly before the completion of make-up. Thus, galling is less likely to occur than in threaded connections with threads having a constant thread width where the clearance between the stabbing flanks is small even during make-up.

The clearance between the stabbing flank of the male thread and the stabbing flank of the female thread may be 100 $\mu$m or smaller (seventh arrangement).

The thread assembly composed of the male thread and the female thread may have a single-start or double-start thread form (eighth arrangement).

[Embodiments]

An embodiment of the threaded connection for steel pipe will now be described with reference to the drawings. The same and corresponding elements in the drawings are labeled with the same reference characters, and the same description will not be repeated.

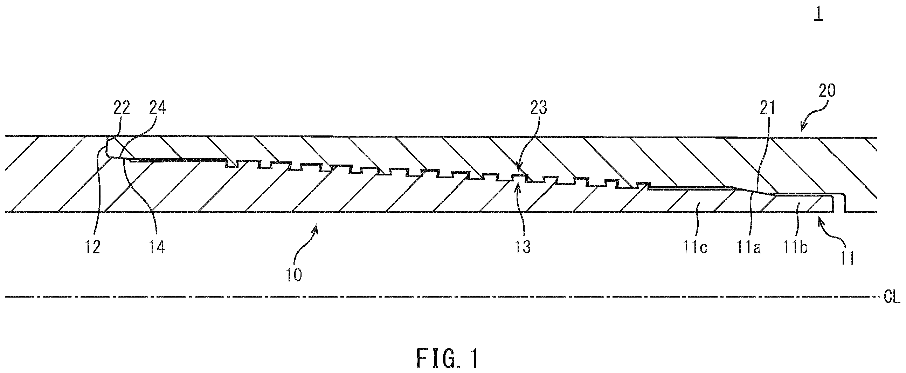

FIG. 1 is a schematic longitudinal cross-sectional view of a threaded connection 1 for steel pipe according to the embodiment. The threaded connection 1 is an integral-type threaded connection. It should be noted that the construction of the threaded connection 1 may be applied to a coupling-type connection.

The threaded connection 1 includes a tubular pin 10 and a tubular box 20. The pin 10 is inserted into the box 20 such that the pin 10 and box 20 are made up.

The construction of the threaded connection 1 is adapted to a slim-type connection where the difference between the outer diameter of the connection and the outer diameter of the steel pipe is small. Thus, the outer diameter of the box 20 is smaller than 108 % of the outer diameter of the steel-pipe body for the pin 10. The outer diameter of the box 20 is 100 % of the outer diameter of the steel-pipe body for the pin 10 or larger. The inner diameter of the pin 10 is larger than the drift diameter specified by the American Petroleum Institute (API) standard.

The steel-pipe body for the pin 10 according to the present embodiment is the portion of the steel pipe including the pin 10 that is not located within the box 20 after insertion. For ease of explanation, the direction toward the tip of the pin 10 may be hereinafter referred to as "inward" or "inner" as determined along the pipe-axis direction, and the direction toward the steel-pipe body of the pin 10 "outward" or "outer" as determined along the pipe-axis direction.

As shown in FIG. 1, the pin 10 includes a pin lip 11, a pin shoulder surface 12, a male thread 13, and a pin outer sealing surface 14.

The pin lip 11 constitutes a tip portion of the pin. The pin lip 11 includes a pin inner sealing surface 11a, a nose 11b, and a base 11c. The pin inner sealing surface 11a is provided on the outer periphery of the pin lip 11. The nose 11b is provided closer to the tip of the pin 10 than the pin inner sealing surface 11a is. That is, the nose 11b is provided on the very tip of the pin 10. The base 11c is a portion of the pin lip 11 that is closer to the male thread 13 than the pin inner sealing surface 11a is.

The pin shoulder surface 12 is provided on the end of the pin 10 adjacent to the steel-pipe body. In the present embodiment, the pin shoulder surface 12 is an annular surface that is generally perpendicular to the pipe axis CL. More specifically, the pin shoulder surface 12 is slightly tilted such that its outer periphery is further toward the direction of advance of screw-in of the pin 10 than its inner periphery.

The male thread 13 is provided on the outer periphery of the pin 10 and is located between the pin lip 11 and pin shoulder surface 12. The male thread 13 is constituted by a single-stage tapered thread. In the male thread 13, the longitudinal cross-sectional thread shape (hereinafter simply referred to as thread shape) is dove-tailed.

The pin outer sealing surface 14 is provided on the outer periphery of the pin 10 and is located between the pin lip 11 and pin shoulder surface 12. The pin outer sealing surface 14 is located outward of the male thread 13 as determined along the pipe-axis direction.

The box 20 includes a box inner sealing surface 21, a box shoulder surface 22, a female thread 23, and a box outer sealing surface 24.

The box inner sealing surface 21 is provided on the inner periphery of the box 20 to correspond to the pin inner sealing surface 11a. The box inner sealing surface 21 is in contact with the pin inner sealing surface 11a when the connection has been made up.

The pin inner sealing surface 11a and box inner sealing surface 21 have interference. That is, the diameter of the pin inner sealing surface 11a is slightly larger than the diameter of the box inner sealing surface 21. As such, as the pin 10 is screwed into the box 20, the pin inner sealing surface 11a and box inner sealing surface 21 contact each other and, when the connection has been made up, are in fitting adhesion to achieve an interference fit. Thus, the pin inner sealing surface 11a and box inner sealing surface 21 form an inner seal assembly via metal-to-metal contact.

The box shoulder surface 22 is provided on the outer end of the box 22 as determined along the pipe-axis direction to correspond to the pin shoulder surface 12. The box shoulder surface 22 is an annular surface that is generally perpendicular to the pipe axis CL. More specifically, the box shoulder surface 22 is slightly tilted such that its outer periphery is further toward the direction of advance of screw-in of the pin 10 than its inner periphery. The box shoulder surface 22 is in contact with the pin shoulder surface 12 when the connection has been made up.

As the pin 10 is screwed into the box 20, the pin shoulder surface 12 and box shoulder surface 22 contact each other and are pressed against each other. The pin shoulder surface 12 and box shoulder surface 22 form a shoulder assembly via this press contact. The pin shoulder surface 12 and box shoulder surface 22 function as a stopper for limiting screw-in of the pin 10. The pin shoulder surface 12 and box shoulder surface 22 function to generate a thread-tightening axial force within the connection.

The female thread 23 is provided on the inner periphery of the box 20 to correspond to the male thread 13. The female thread 23 is formed by a single-stage tapered thread capable of engaging the tapered thread constituting the male thread 13. The thread shape of the female thread 23 is dove-tailed.

The thread width of the thread assembly, composed of the male thread 13 and female thread 23, changes along the direction of advance of screw-in of the pin 10. More specifically, the thread width of the male thread 13 decreases in a tapered manner in the direction of advance of the right thread along the helix (or lead direction) of the thread. The thread groove width of the corresponding female thread 23 also decreases in a tapered manner in the direction of advance of the right thread along the helix of the thread. The threads preferably have a single-start or double-start thread form.

The box outer sealing surface 24 is provided on the inner periphery of the box 20 to correspond to the pin outer sealing surface 14. The box outer sealing surface 24 is located outward of the female thread 23 as determined along the pipe-axis direction. The box outer sealing surface 24 is in contact with the pin outer sealing surface 14 when the connection has been made up.

The pin outer sealing surface 14 and box outer sealing surface 24 have interference. That is, the diameter of the pin outer sealing surface 14 is slightly larger than the diameter of the box outer sealing surface 24. As such, as the pin 10 is screwed into the box 20, the pin outer sealing surface 14 and box outer sealing surface 24 contact each other and, when the connection has been made up, are in fitting adhesion to achieve an interference fit. Thus, the pin outer sealing surface 14 and box outer sealing surface 24 form an outer seal assembly via metal-to-metal contact.

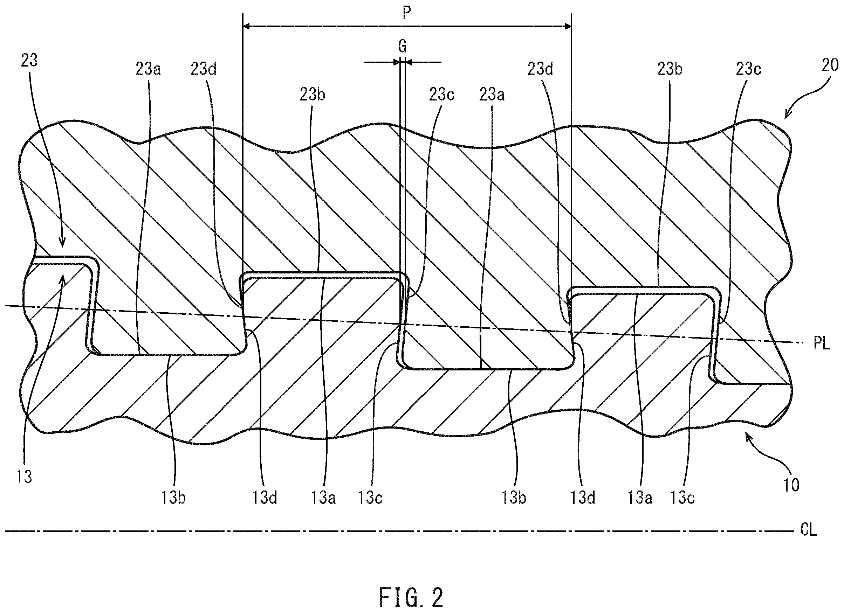

FIG. 2 is a partial enlarged view of FIG. 1, which schematically shows threads of the thread connection 1.

As shown in FIG. 2, the male thread 13 includes, as viewed looking at a cross section passing through the pipe axis CL, a plurality of thread crests 13a, a plurality of thread roots 13b, a plurality of stabbing flanks 13c and a plurality of load flanks 13d. Each stabbing flank 13c is a surface going ahead as the pin 10 is screwed into the box 20. Each load flank 13d is a surface opposite to a stabbing flank 13d.

The female thread 23 includes, as viewed looking at a cross section passing through the pipe axis CL, a plurality of thread crests 23a, a plurality of thread roots 23b, a plurality of stabbing flanks 23c, and a plurality of load flanks 23d. Each thread crest 23a of the female thread 23 faces the corresponding thread root 13b of the male thread 13. Each thread root 23b of the female thread 23 faces the corresponding thread crest 13a of the male thread 13. Each stabbing flank 23c of the female thread 23 faces the corresponding stabbing flank 13c of the male thread 13. Each load flank 23d of the female thread 23 faces the corresponding load flank 13d of the male thread 13.

As discussed above, the thread shape of the male and female threads 13 and 23 is dove-tailed. As such, the flank angles of the stabbing flanks 13c and 23c are negative angles smaller than 0°. Flank angle as used in the present embodiment means an angle formed by a plane perpendicular to the pipe axis CL and a flank. In FIG. 2, for the flank angles of the stabbing flanks 13c and 23c, the counterclock direction is the positive direction. That is, the stabbing flanks 13c and 23c are inclined toward the tip of the pin 10 as viewed looking at a cross section passing through the pipe axis CL.

The flank angles of the load flanks 13d and 23d are also negative angles smaller than 0°. In FIG. 2, for the flank angles of the load flanks 13d and 23d, the clockwise direction is the positive direction. As viewed looking at a cross section passing through the pipe axis CL, the load flanks 13d and 23d are inclined toward the other direction from that for the stabbing flanks 13c and 23c, i.e. toward the steel-pipe body of the pin 10.

When the connection has been made up, each thread root 13b of the male thread 13 and the corresponding thread crest 23a of the female thread 23 are in contact with each other. The load flanks 13d and 23d of the male thread 13 and female thread 23 are in contact with each other. On the other hand, each thread crest 13a of the male thread 13 and the corresponding thread root 23b of the female thread 23 are not in contact with each other. The stabbing flanks 13c and 23c of the male thread 13 and female thread 23 are not in contact with each other.

When the connection has been made up, each stabbing flank 13c of the male thread 13 faces the corresponding stabbing flank 23c of the female thread 23 with a clearance G provided therebetween. The clearance G between the stabbing flanks 13c and 23c is the distance, as measured in the pipe-axis direction, between the intersection of the stabbing flank 13c of the male thread 13 and the thread pitch line PL as viewed looking at a cross section including the pitch line PL, and the stabbing flank 23c of the female thread 23 facing this stabbing flank 13c. The pitch line PL is a line on a longitudinal cross section including the pipe axis CL, connecting the points that are each on a load flank 13d of the male thread 13 and located at a half of the load-flank height. The clearance G may be decided appropriately taking account of the degree of lead errors, for example. Although not limited, the clearance G is preferably equal to or smaller than 100 $\mu$m.

The male thread 13 has a constant thread pitch P. The thread pitch P is the distance between the load flanks 13d of two adjacent threads. More exactly, as viewed looking at a cross section including the thread pitch line PL, the thread pitch P is the distance between the intersection of the load flank 13d of a thread and the pitch line PL and the intersection of the load flank 13d of another thread located adjacent to that thread and the pitch line PL. In short, the thread pitch P is the pitch of the load flanks of the male thread 13. In the present embodiment, the thread pitch P of the male thread 13 is thus defined, regardless of whether the thread has a single-start or multiple-start thread form.

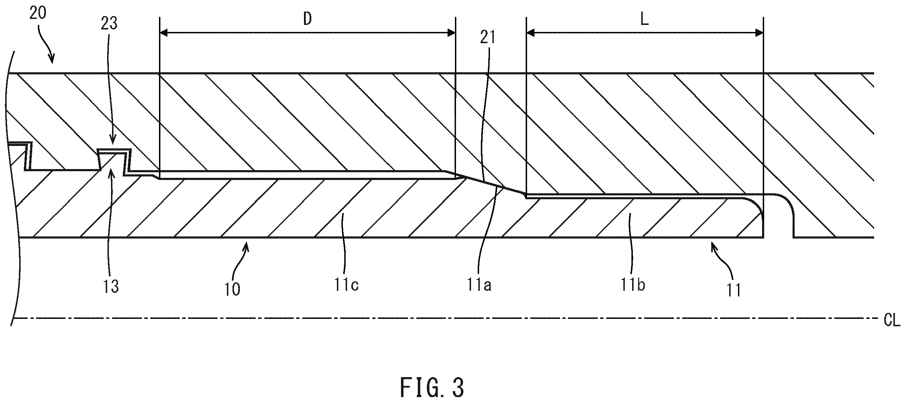

FIG. 3 is a partial enlarged view of FIG. 1, which schematically shows the inner end of the threaded connection 1 as determined along the pipe-axis direction.

As shown in FIG. 3, the pin inner sealing surface 11a is a convex surface formed on the outer periphery of the pin lip 11. The pin inner sealing surface 11a and the outer peripheral surface of the nose 11b form a discontinuous shape. The pin inner sealing surface 11a and the outer periphery of the base 11c also form a discontinuous shape. Thus, on the outer peripheral surface of the pin lip 11, there is a clear border between the nose 11b and pin inner sealing surface 11a and one between the pin inner sealing surface 11a and base 11c. The nose 11b is concave toward the inner periphery of the pin 10 relative to the pin inner sealing surface 11a. The base 11c is concave toward the inner periphery of the pin 10 relative to the male thread 13 and pin inner sealing surface 11a.

The outer diameter of the nose 11b is smaller than the diameter of the inner peripheral surface of the portion of the box 20 that faces the nose 11b. Thus, the nose 11b does not interfere with the box 20 during make-up and upon make-up. That is, a clearance is always present between the outer peripheral surface of the nose 11b and the inner peripheral surface of the box 20.

In the present embodiment, the nose 11b has the shape of a cylinder having a substantially constant outer diameter. However, the nose 11b is not limited to a particular shape. For example, the nose 11b may have the shape of a hollow truncated cone, for example.

The outer diameter of the base 11c is smaller than the diameter of the inner peripheral surface of the portion of the box 20 that faces the base 11c. Thus, similar to the nose 11b, the base 11c does not interfere with the box 20 during make-up and upon make-up. A clearance is also always present between the outer peripheral surface of the base 11c and the inner peripheral surface of the box 20.

Referring to FIGS. 2 and 3, the length of the base 11c as measured in the pipe-axis direction, i.e. the distance D between the male thread 13 and pin inner sealing surface 11a as measured in the pipe-axis direction is decided taking account of the relationship between the length L of the nose 11b as measured in the pipe-axis direction and the thread pitch P of the male thread 13. The distance D between the male thread 13 and pin inner sealing surface 11a is the distance between the inner end of the male thread 13 and the border between the base 11c and pin inner sealing surface 11a as measured in the pipe-axis direction. In the present embodiment, the distance D is the length, as measured in the pipe-axis direction, of the portion of the outer peripheral surface of the pin lip 11 that is located between the male thread 13 and pin inner sealing surface 11a and has substantially no step. The length L of the nose 11b is the distance, as measured in the pipe-axis direction, between the border between the pin inner sealing surface 11a and nose 11b and the tip of the pin lip 11. In the present embodiment, the length L is the length, as measured in the pipe-axis direction, of the portion of the outer peripheral surface of the pin lip 11 that is located between the inner end of the pin inner sealing surface 11a and the tip of the pin lip 11 and that has substantially no step.

The distance D between the male thread 13 and pin inner sealing surface 11a is 1.5 times the thread pitch P of the male thread 13 or larger. The length L of the nose 11b is larger than the thread pitch P of the male thread 13. The difference between the distance D and length L is equal to or smaller than the thread pitch P. That is, the distance D between the male thread 13 and pin inner sealing surface 11a, the length L of the nose 11b, and the thread pitch P of the male thread 13 are decided so as to satisfy the following equations, equations (1) to (3):

$$D \geq P \times 1.5 \qquad (1),$$

$$L > P \qquad (2),$$

and

$$|D - L| \leq P \qquad (3).$$

For example, the distance D may be three times the thread pitch P or smaller from material and manufacturing cost viewpoints. However, the upper limit of the distance D is not particularly specified. Similarly, the upper limit of the length L is not particularly specified.

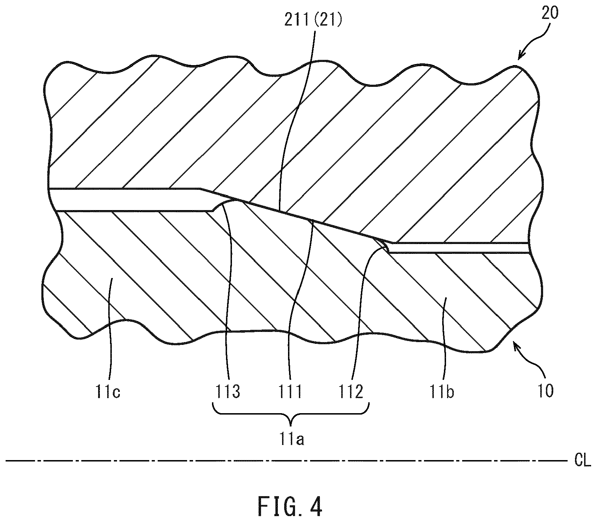

FIG. 4 is a partial enlarged view of FIG. 1, which schematically shows the inner seal assembly of the threaded connection 1.

The pin inner sealing surface 11a is a convex surface including a tapered surface 111 and arc surfaces 112 and 113. The tapered surface 111 reduces its diameter toward the tip of the pin 10. The tapered surface 111 has a shape consistent with a part of the peripheral surface of a truncated cone in which diameters closer to the tip are smaller than diameters closer to the steel-pipe body. The arc surfaces 112 and 113 having smaller radii of curvature connect to the edges of the tapered surface 111.

The arc surface 112 and the inner edge, as determined along the pipe-axis direction, of the tapered surface 111 form a smooth and continuous surface. The arc surface 113 is located on the side of the tapered surface that is opposite to that with the arc surface 112, and the arc surface 113 and the outer edge, as determined along the pipe-axis direction, of the tapered surface 111 form a smooth and continuous surface. Each of the arc surfaces 112 and 113 has a shape consistent with a part of the peripheral surface of a body of rotation that is obtained by rotating an arc about the pipe axis CL.

The radii of curvature of the arc surfaces 112 and 113 may be in the range of, for example, R3 to R30 (3 mm to 30 mm). However, the radii of curvature of the arc surfaces 112 and 113 are not limited to this range. The radii of curvature of the arc surfaces 112 and 113 may be decided appropriately taking account of the inclination of the tapered surface 111, for example.

The box inner sealing surface 21 includes a tapered surface 211. The tapered surface 211 has a larger length than the pin inner sealing surface 11a. For example, when the connection has been made up, the tapered surface 211 extends to a position outward of the pin inner sealing surface 11a as determined along the pipe-axis direction. The tapered surface 211 has an inclination consistent with that of the tapered surface 111 of the pin inner sealing surface 11a.

[Effects of Embodiments]

In the above-illustrated embodiment, the distance D between the male thread 13 and pin inner sealing surface 11a as measured in the pipe-axis direction and the length L of the nose 11b are balanced so as to effectively improve the sealing performance against the internal pressure. That is, the distance D between the male thread 13 and pin inner sealing surface 11a is 1.5 times the thread pitch P of the male thread 13 or larger, and the length L of the nose 11b is larger than the thread pitch P. Further, the difference between the distance D and length L is equal to or smaller than the thread pitch P. This amplifies the adhesion force at the inner seal assembly by means of the nose 11b and, at the same time, prevents the amplification of adhesion force by the internal pressure load which depends on the distance D from being reduced by the nose 11b. This will effectively amplify the adhesion force at the inner seal assembly.

In the above-illustrated embodiment, the pin lip 11 includes a nose 11b. Thus, the pin lip 11 has a large bending rigidity and cannot be easily deformed. This prevents the pin lip 11 from being expanded toward the outer periphery by the internal pressure load, thereby preventing the pin inner sealing surface 11a from being inclined relative to the box inner sealing surface 21. This prevents the position of contact between the pin inner sealing surface 11a and box inner sealing surface 21 from moving, thereby stabilizing the sealing performance against the internal pressure.

In the threaded connection 1 according to the above-illustrated embodiment, a clearance is formed between the stabbing flank 13c of the male thread 13 and the stabbing flank 23c of the female thread 23 when the connection has been made up such that the connection is not susceptible to various errors. Further, since the pin shoulder surface 12 and box shoulder surface 22 are in contact with each other when the connection has been made up, the position of completion of make-up can be controlled. This introduces stable seal interference, thereby providing a stable sealing performance against the internal pressure and external pressure.

Thus, in the threaded connection 1 according to the above-illustrated embodiment, the adhesion force at the inner seal assembly can be improved without increasing the interference at the inner seal assembly, for example, or adjusting the design so as to reduce the sealing performance of the outer seal assembly. This provides a good and stable sealing performance against the internal pressure while maintaining the sealing performance against the external pressure.

In the above-illustrated embodiment, the pin inner sealing surface 11a is a convex surface composed of a tapered surface 111 and arc surfaces 112 and 113. The box inner sealing surface 21 has a single tapered surface 211 having a larger length than the pin inner sealing surface 11a. This construction ensures that, during most of the make-up process, the tapered surface 111 of the pin inner sealing surface 11a and the tapered surface 211 of the box inner sealing surface 21 slide in contact with each other and, during the final stage of make-up and after completion of make-up, the arc surface 113 of the pin inner sealing surface 11a is in contact with the tapered surface 211 of the box inner sealing surface 21. Since the arc surface 113 forms an edge of the pin inner sealing surface 11a, it has a smaller radius of curvature than a conventional pin inner sealing surface that is entirely formed by a single arc surface. Thus, even if the pin inner sealing surface 11a is inclined relative to the box inner sealing surface 21, the amount of movement of the position of contact between the pin inner sealing surface 11a and box inner sealing surface 21 can be minimized. This will further stabilize the sealing performance against the internal pressure.

In the above-illustrated embodiment, the pin outer sealing surface 14 is located at the end of the pin 10 adjacent to the steel-pipe body. That is, the thread assembly is located between the inner seal assembly and outer seal assembly. Thus, the thread assembly may be formed by single-stage threads, and the wall thickness, which can be used for threads, can be larger than in implementations where the thread assembly is divided into two stages by an outer sealing assembly.

This will increase the perfect thread regions and thus reduce the decrease in the tensile strength of the thread connection, thereby providing sufficient connection strength.

In a threaded connection with threads having a constant thread width, the clearance between the stabbing flank of the male thread and the stabbing flank of the female thread is small during make-up such that galling can easily occur. In contrast, in the above-illustrated embodiment, the thread width of the threads changes along the lead direction. Thus, most of the make-up process occurs while a large clearance is present between the load flank 13d of the male thread 13 and the load flank 23d of the female thread 23 and a large clearance is present between the stabbing flank 13c of the male thread 13 and the stabbing flank 23c of the female thread 23. This will prevent galling.

[Variations]

Although an embodiment has been described, the present invention is not limited to the above-illustrated embodiment, and various modifications are possible without departing from the scope of the invention as defined in the appended claims. For example, in the above-illustrated embodiment, an outer seal assembly is provided outward of the thread assembly as determined along the pipe-axis direction; alternatively, an outer seal assembly may be provided in the middle of the thread assembly. In such implementations, the thread assembly may be constituted by a plurality of thread stages.

The threaded connection according to the above-illustrated embodiment includes two seal assemblies (i.e. inner seal assembly and outer seal assembly). However, a thread connection may be provided including three or more seal assemblies.

In the above-illustrated embodiment, the pin inner sealing surface is constituted by a convex surface including a tapered surface and two arc surfaces. However, the pin inner sealing surface is not limited to this construction. For example, the pin inner sealing surface may be constituted by a single arc surface, as according to the conventional art. The box inner sealing surface corresponding to the pin inner sealing surface is not limited to a particular construction.

In the above-illustrated embodiment, when the connection has been made up, the thread root of the male thread and the thread crest of the female thread are in contact with each other, and the thread crest of the male thread and the thread root of the female thread are not in contact with each other. However, when the connection has been made up, the thread root of the male thread and the thread crest of the female thread may not be in contact with each other and the thread crest of the male thread and the thread root of the female thread may be in contact with each other.

EXAMPLES

To verify the effects of the threaded connection for steel pipe according to the present disclosure, numerical simulation analysis was conducted by the elastic-plastic finite element method.

<Test Conditions>

In the elastic-plastic finite element analysis, a model of a threaded connection having the basic construction shown in FIGS. 1 to 4 were used to provide a control, inventive examples 1-1 and 1-2 and comparative examples 1-1 to 1-3. The test conditions common to the control, inventive examples 1-1 and 1-2 and comparative examples 1-1 to 1-3 are as follows:

- Dimensions of steel pipe: outer diameter of 355.6 mm and wall thickness of 20.6 mm
- Material: carbon steel Q125 according to the API specification (yield strength of 862 $N/mm^2$)
- Shape of connection: semi-flush-type threaded connection shown in FIG. 1 having single-stage threads, an outer shoulder assembly, and two seal assemblies (inner and outer seal assemblies)
- Shape and dimensions of threads: threads shown in FIG. 2 with a changing thread width and a dove-tailed cross section with a thread height (load flank height) of 1.6 mm and a thread pitch (load flank pitch) of 8.5 mm
- Shape and dimensions of pin lip: pin lip having the shape shown in FIG. 3, with a lip thickness of 5.3 mm and a nose thickness of 4.4 mm

Table 1 shows combinations of values of the distance D between the male thread and pin inner sealing surface as measured in the pipe-axis direction and values of the length L of the nose as measured in the pipe-axis direction. Inventive examples 1-1 and 1-2 used combinations of the values of the distance D and length L that satisfy all of equations (1) to (3). Comparative examples 1-1 to 1-3 used combinations of the values of the distance D and length L that do not satisfy at least one or more of equations (1) to (3). The control was a threaded connection without a nose, where the length L of the nose was zero.

$$D \geq P \times 1.5 \qquad (1),$$

$$L > P \qquad (2),$$

and

$$|D-L| \leq P \qquad (3).$$

[Table 1]

|  | D [mm] | L [mm] | D/P | L/P | |D-L| [mm] |
|---|---|---|---|---|---|
| Control | 22 | 0 | 2.59 | 0 | 22 |
| Inv. Ex. 1-1 | 22 | 18 | 2.59 | 2.12 | 4 |
| Inv. Ex. 1-2 | 16 | 18 | 1.88 | 2.12 | 2 |
| Comp. Ex. 1-1 | 16 | 6 | 1.88 | 0.71 | 10 |
| Comp. Ex. 1-2 | 22 | 6 | 2.59 | 0.71 | 16 |
| Comp. Ex. 1-3 | 28 | 6 | 3.29 | 0.71 | 22 |
| Comp. Ex. 2 | 9.1 | 13.5 | 1.07 | 1.59 | 4.4 |

D: Distance between male thread and pin inner sealing surface as measured in pipe-axis direction
L: Length of nose as measured in pipe-axis direction
P: Thread pitch of male thread (8.5 mm)

To provide a threaded connection according to the conventional art (comparative example 2) for comparison, a model of the threaded connection shown in FIG. 1 of the above-mentioned European Patent No. 1836426 was created. The thread pitch of the male thread was 8.5 mm, as in the above-described examples, and the distance D between the male thread and pin inner sealing surface and the length L of the nose in comparative example 2 were calculated from the dimensional ratios of various elements obtained from FIG. 1 of European Patent No. 1836426 (Table 1). The lip thickness of the pin lip calculated in a similar manner was 2.72 mm, and the nose thickness was 1.53 mm. The other test conditions were the same as in the above-described examples.

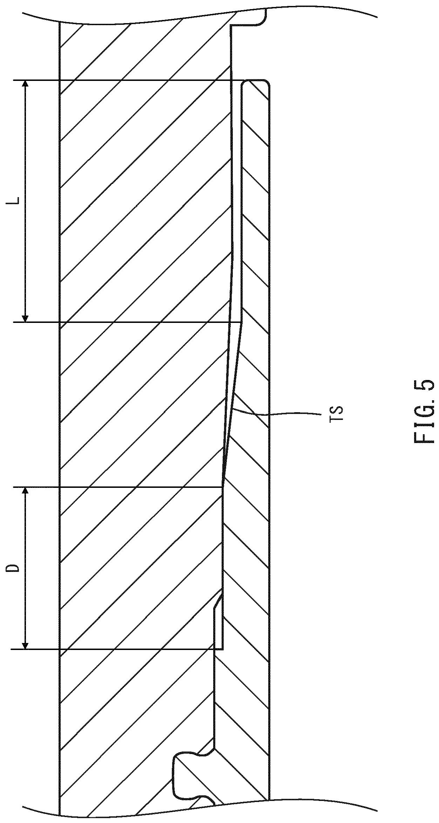

European Patent No. 1836426 states that the tapered surface on the pin lip (designated by characters TS in FIG. 5) is a sealing surface; based on this, in comparative example 2, the length of the cylindrical portion located closer to the tip than this tapered surface TS as measured in the pipe-axis direction was treated as the length L of the nose. Further, the distance D between the male thread and pin inner sealing surface was defined as the length of the cylindrical portion between the male thread and tapered surface TS (that has no step on the outer periphery) as measured in the pipe-axis direction.

<Evaluation Method>

In the elastic-plastic finite element analysis, after the pin and box were made up, repeated combined loads simulating test series A of ISO 13679 were applied. The minimum values of the seal contact force at the inner seal assembly during this analysis (minimum sealing surface pressure) were compared, the values being relative values where the value of the control was 1. Further, values of the angle of inclination of the pin inner sealing surface during the second application of the internal pressure load were compared. Table 2 shows the results of this analysis/evaluation.

[Table 2]

|  | Minimum sealing surface pressure during analysis (*1) | Angle of inclination of pin inner sealing surface during application of load from simple internal pressure (*2) [deg] |
|---|---|---|
| Control | 1.00 | 3.3 |

(continued)

| | Minimum sealing surface pressure during analysis (*1) | Angle of inclination of pin inner sealing surface during application of load from simple internal pressure (*2) [deg] |
|---|---|---|
| Inv. Ex. 1-1 | 2.14 | 2.7 |
| Inv. Ex. 1-2 | 2.24 | 2.4 |
| Comp. Ex. 1-1 | 1.34 | 2.8 |
| Comp. Ex. 1-2 | 1.21 | 3.4 |
| Comp. Ex. 1-3 | 0.79 | 5.3 |
| Comp. Ex. 2 | 0.78 | 3.6 |
| *1: Relative values where value for control is 1 *2: Increase from angle before make-up | | |

It is clear from Table 2 that, in the threaded connections of inventive examples 1-1 and 1-2, the values of the minimum sealing surface pressure are clearly larger than those of the threaded connections of the control and comparative examples, meaning that a high seal contact force is kept. Further, in the threaded connections of inventive examples 1-1 and 1-2, the values of the angle of inclination of the pin inner sealing surface are smaller than those of the threaded connections of the control and comparative examples, which shows that the inclination of the pin inner sealing surface is minimized. This shows that a threaded connection that satisfies equations (1) to (3) has significantly improved and stable sealing performance against the internal pressure.

## Claims

1.   A threaded connection (1) for steel pipe comprising:

a tubular pin (10); and
a tubular box (20), having an outer diameter smaller than 108% of an outer diameter of a steel pipe body, wherein the box and the pin are made up as the pin is inserted into the box,
the pin (10) including:

a pin lip (11) including a pin inner sealing surface (11a) provided on an outer periphery of a tip portion of the pin (10), and a nose (11b) located closer to a tip of the pin (10) than the pin inner sealing surface (11a), the nose (11b) having an outer peripheral surface with a diameter smaller than a diameter of an inner peripheral surface of the box (20) facing the pin, the outer peripheral surface of the nose (11b) and the pin inner sealing surface (11a) forming a discontinuous shape;
a pin shoulder surface (12) provided on an end of the pin (10) located closer to the steel-pipe body;
a male thread (13) provided on an outer periphery of the pin between the pin lip (11) and the pin shoulder surface (12), the male thread being constituted by a dove-tailed tapered thread; and
a pin outer sealing surface (14) provided on the outer periphery of the pin between the pin lip (11) and the pin shoulder surface (12),

the box (20) including:

a box inner sealing surface (21) provided on an inner periphery of the box (20) so as to correspond to the pin inner sealing surface (11a), the box inner sealing surface (21) being in contact with the pin inner sealing surface (11a) when the connection has been made up;
a box shoulder surface (22) provided on an end side of the box (20) so as to correspond to the pin shoulder surface (12), the box shoulder surface (22) being in contact with the pin shoulder surface (12) when the connection has been made up;
a female thread (23) provided on the inner periphery of the box (20) so as to correspond to the male thread

14

(13), the female thread being constituted by a dove-tailed tapered thread, the female thread (23) having a stabbing flank (23c) facing a stabbing flank (13c) of the male thread (13) so as to leave a clearance (9) when the connection has been made up; and

a box outer sealing surface (24) provided on the inner periphery of the box (20) so as to correspond to the pin outer sealing surface (14), the box outer sealing surface (24) being in contact with the pin outer sealing surface (14) when the connection has been made up,

wherein the following equations (1) to (3), are satisfied:

$$D \geq P \times 1.5 \qquad (1),$$

$$L > P \qquad (2),$$

and

$$|D - L| \leq P \qquad (3),$$

where D is the distance between the male thread (13) and the pin inner sealing surface (11a) as measured in the pipe-axis direction, L is the length of the nose (11b) as measured in the pipe-axis direction, and P is the thread pitch of the male thread.

2. The threaded connection (1) for steel pipe according to claim 1, wherein the pin inner sealing surface (11a) is a convex surface including a tapered surface reducing its diameter toward the tip of the pin (10) and arc surfaces each continually connecting to a corresponding one of edges of the tapered surface, and
the box inner sealing surface (21) includes a tapered surface having a larger length than the pin inner sealing surface.

3. The threaded connection (1) for steel pipe according to claim 2, wherein the arc surfaces have a radius of curvature of 3 mm to 30 mm.

4. The threaded connection (1) for steel pipe according to any one of claims 1 to 3, wherein the pin outer sealing surface (14) is located at an end of the pin adjacent the steel-pipe body.

5. The threaded connection (1) for steel pipe according to any one of claims 1 to 4, wherein the distance D is three times the thread pitch P or smaller.

6. The threaded connection (1) for steel pipe according to any one of claims 1 to 5, wherein a thread assembly composed of the male thread and the female thread has a thread width changing along a lead direction.

7. The threaded connection (1) for steel pipe according to any one of claims 1 to 6, wherein the clearance between the stabbing flank (13c) of the male thread (13) and the stabbing flank (23c) of the female thread (23) is 100 $\mu$m or smaller.

8. The threaded connection (1) for steel pipe according to any one of claims 1 to 7, wherein a thread assembly composed of the male thread (13) and the female thread (23) has a single-start or double-start thread form.

**Patentansprüche**

1. Gewindeverbindung (1) für ein Stahlrohr, umfassend:

einen rohrförmigen Stift (10) und
einen rohrförmigen Kasten (20) mit einem Außendurchmesser, der kleiner als 108 % eines Außendurchmessers eines Stahlrohrkörpers ist,
wobei der Kasten und der Stift zusammengesetzt werden, wenn der Stift in den Kasten eingeführt wird,

wobei der Stift (10) enthält:

eine Stiftlippe (11), einschließlich einer inneren Stiftdichtungsoberfläche (11a), die an einem äußeren Umfang eines Spitzenabschnitts des Stiftes (10) bereitgestellt ist, und einer Nase (11b), die näher an einer Spitze des Stiftes (10) angeordnet ist als die innere Stiftdichtungsoberfläche (11a), wobei die Nase (11b) eine äußere Umfangsoberfläche mit einem Durchmesser aufweist, der kleiner ist als ein Durchmesser einer inneren Umfangsoberfläche des Kastens (20), die dem Stift zugewandt ist, wobei die äußere Umfangsoberfläche der Nase (11b) und die innere Stiftdichtungsoberfläche (11a) eine diskontinuierliche Form ausbilden;

eine Stiftschulteroberfläche (12), die an einem Ende des Stiftes (10) bereitgestellt ist, das näher an dem Stahlrohrkörper angeordnet ist;

ein Außengewinde (13), das an einem Außenumfang des Stiftes zwischen der Stiftlippe (11) und der Stiftschulteroberfläche (12) bereitgestellt ist, wobei das Außengewinde durch ein schwalbenschwanzförmiges, konisches Gewinde gebildet wird; und

eine äußere Stiftdichtungsoberfläche (14), die an dem Außenumfang des Stiftes zwischen der Stiftlippe (11) und der Stiftschulteroberfläche (12) bereitgestellt ist,

wobei der Kasten (20) enthält:

eine innere Kastendichtungsoberfläche (21), die an einem Innenumfang des Kastens (20) derart bereitgestellt ist, dass sie der inneren Stiftdichtungsoberfläche (11a) entspricht, wobei die innere Kastendichtungsoberfläche (21) mit der inneren Stiftdichtungsoberfläche (11a) in Kontakt steht, wenn die Verbindung hergestellt wurde;

eine Kastenschulteroberfläche (22), die an einer Endseite des Kastens (20) derart bereitgestellt ist, dass sie der Stiftschulteroberfläche (12) entspricht, wobei die Kastenschulteroberfläche (22) mit der Stiftschulteroberfläche (12) in Kontakt steht, wenn die Verbindung hergestellt wurde;

ein Innengewinde (23), das an dem Innenumfang des Kastens (20) derart bereitgestellt ist, dass es dem Außengewinde (13) entspricht, wobei das Innengewinde durch ein schwalbenschwanzförmiges konisches Gewinde gebildet wird, wobei das Innengewinde (23) eine Stichflanke (23c) aufweist, die einer Stichflanke (13c) des Außengewindes (13) zugewandt ist, sodass ein Spiel (9) verbleibt, wenn die Verbindung hergestellt wurde; und

eine äußere Kastendichtungsoberfläche (24), die an dem Innenumfang des Kastens (20) derart bereitgestellt ist, dass sie der äußeren Stiftdichtungsoberfläche (14) entspricht, wobei die äußere Kastendichtungsoberfläche (24) mit der äußeren Stiftdichtungsoberfläche (14) in Kontakt steht, wenn die Verbindung hergestellt wurde,

wobei die folgenden Gleichungen (1) bis (3) erfüllt werden:

$$D > P\ 1{,}5 \qquad (1),$$

$$L > P \qquad (2),$$

und

$$D—L < P \qquad (3),$$

wobei D der Abstand zwischen dem Außengewinde (13) und der inneren Stiftdichtungsoberfläche (11a), gemessen in der Richtung der Rohrachse, ist, L die Länge der Nase (11b), gemessen in der Richtung der Rohrachse, ist und P die Gewindesteigung des Außengewindes ist.

2. Gewindeverbindung (1) für ein Stahlrohr nach Anspruch 1, wobei die innere Stiftdichtungsoberfläche (11a) eine konvexe Oberfläche ist, die eine konische Oberfläche, die ihren Durchmesser zu der Spitze des Stifts (10) hin verringert, und Bogenoberflächen enthält, die jeweils kontinuierlich mit einer entsprechenden Kante der konischen Oberfläche verbunden sind, und

die innere Kastendichtungsoberfläche (21) eine konische Oberfläche enthält, die eine größere Länge als die innere Stiftdichtungsoberfläche aufweist.

3. Gewindeverbindung (1) für ein Stahlrohr nach Anspruch 2, wobei die Bogenoberflächen einen Krümmungsradius von 3 mm bis 30 mm aufweisen.

4. Gewindeverbindung (1) für ein Stahlrohr nach einem der Ansprüche 1 bis 3, wobei die äußere Stiftdichtungsoberfläche (14) an einem Ende des Stifts neben dem Stahlrohrkörper angeordnet ist.

5. Gewindeverbindung (1) für ein Stahlrohr nach einem der Ansprüche 1 bis 4, wobei der Abstand D das Dreifache der Gewindesteigung P oder weniger beträgt.

6. Gewindeverbindung (1) für ein Stahlrohr nach einem der Ansprüche 1 bis 5, wobei eine Gewindeanordnung, die aus dem Außengewinde und dem Innengewinde besteht, eine sich entlang einer Steigungsrichtung ändernde Gewindebreite aufweist.

7. Gewindeverbindung (1) für ein Stahlrohr nach einem der Ansprüche 1 bis 6, wobei das Spiel zwischen der Stichflanke (13c) des Außengewindes (13) und der Stichflanke (23c) des Innengewindes (23) 100 μm oder weniger beträgt.

8. Gewindeverbindung (1) für ein Stahlrohr nach einem der Ansprüche 1 bis 7, wobei eine Gewindeanordnung, die aus dem Außengewinde (13) und dem Innengewinde (23) besteht, eine eingängige oder doppelgängige Gewindeform aufweist.

**Revendications**

1. Connexion filetée (1) pour tuyau en acier, comprenant :

une broche tubulaire (10) ; et
un boîtier (20), ayant un diamètre externe inférieur à 108 % d'un diamètre externe d'un corps de tuyau en acier, le boîtier et la broche étant fixés lorsque la broche est insérée dans le boîtier, la broche (10) incluant :

une lèvre de broche (11) incluant une surface de scellement interne de broche (11a) disposée sur une périphérie externe d'une partie d'embout de la broche (10), et un nez (11b) situé plus près d'un embout de la broche (10) que la surface de scellement interne de broche (11a), le nez (11b) ayant une surface périphérique externe avec un diamètre inférieur à un diamètre d'une surface périphérique interne du boîtier (20) faisant face à la broche, la surface périphérique externe du nez (11b) et la surface de scellement interne de broche (11a) formant une forme discontinue ;
une surface d'épaulement de broche (12) disposée sur une extrémité de la broche (10) située plus près du corps de tuyau en acier ;
un filetage mâle (13) disposé sur une périphérie externe de la broche entre la lèvre de broche (11) et la surface d'épaulement de broche (12), le filetage mâle étant constitué par un filetage conique en queue-d'aronde ; et
une surface de scellement externe de broche (14) disposée sur la périphérie externe de la broche entre la lèvre de broche (11) et la surface d'épaulement de broche (12),

le boîtier (20) incluant :

une surface de scellement interne de boîtier (21) disposée sur une périphérie interne du boîtier (20) de manière à correspondre à la surface de scellement interne de broche (11a), la surface de scellement interne de boîtier (21) étant en contact avec la surface de scellement interne de broche (11a) lorsque la connexion a été fixée ;
une surface d'épaulement de boîtier (22) disposée sur un côté d'extrémité du boîtier (20) de manière à correspondre à la surface d'épaulement de broche (12), la surface d'épaulement de boîtier (22) étant en contact avec la surface d'épaulement de broche (12) lorsque la connexion a été fixée ;
un filetage femelle (23) disposé sur la périphérie interne du boîtier (20) de manière à correspondre au filetage mâle (13), le filetage femelle étant constitué par un filetage conique en queue-d'aronde, le filetage femelle (23) ayant un flanc vif (23c) qui fait face à un flanc vif (13c) du filetage mâle (13) de manière à laisser un espace (9) lorsque la connexion a été fixée ; et
une surface de scellement externe de boîtier (24) disposée sur la périphérie interne du boîtier (20) de manière à correspondre à la surface de scellement externe de broche (14), la surface de scellement externe de boîtier (24) étant en contact avec la surface de scellement externe de broche (14) lorsque la connexion a été fixée,

les équations (1) à (3) suivantes étant satisfaites :

$$D \geq P \times 1{,}5 \quad (1)$$

$$L > P \quad (2),$$

et

$$\left| D - L \right| \leq P \quad (3)$$

où D est la distance entre le filetage mâle (13) et la surface de scellement interne de broche (11a) telle sur mesurée dans la direction de l'axe du tuyau, L est la longueur du nez (11b) telle que mesurée dans la direction de l'axe du tuyau, et P est le pas de filetage du filetage mâle.

2. Connexion filetée (1) pour tuyau en acier selon la revendication 1, dans laquelle la surface de scellement interne de broche (11a) est une surface convexe incluant une surface conique qui réduit son diamètre vers l'embout de la broche (10) et des surfaces d'arc qui sont chacune connectées en continu à un bord correspondant parmi les bords de la surface conique, et la surface de scellement interne de boîtier (21) inclut une surface conique ayant une longueur plus grande que la surface de scellement interne de broche.

3. Connexion filetée (1) pour tuyau en acier selon la revendication 2, dans laquelle les surfaces d'arc ont un rayon de courbure de 3 mm à 30 mm.

4. Connexion filetée (1) pour tuyau en acier selon l'une quelconque des revendications 1 à 3, dans laquelle la surface de scellement externe de broche (14) est située à une extrémité de la broche adjacente au corps de tuyau en acier.

5. Connexion filetée (1) pour tuyau en acier selon l'une quelconque des revendications 1 à 4, dans laquelle la distance D est trois fois le pas de filetage P ou moins.

6. Connexion filetée (1) pour tuyau en acier selon l'une quelconque des revendications 1 à 5, dans laquelle un ensemble de filetage composé par le filetage mâle et le filetage femelle a une largeur de filetage qui change le long d'une direction de conduite.

7. Connexion filetée (1) pour tuyau en acier selon l'une quelconque des revendications 1 à 6, dans laquelle l'espace entre le flanc vif (13c) du filetage mâle (13) et le flanc vif (23c) du filetage femelle (23) est de 100 $\mu$m ou moins.

8. Connexion filetée (1) pour tuyau en acier selon l'une quelconque des revendications 1 à 7, dans laquelle un ensemble de filetage composé par le filetage mâle (13) et le filetage femelle (23) a une forme de filetage simple ou double.

EP 3 470 720 B1

FIG. 1

FIG. 2

EP 3 470 720 B1

FIG. 3

FIG. 4

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1836426 A
- US 4795200 A
- WO 2015194193 A1
- US 8029025 B1